# EUROPÄISCHE PATENTSCHRIFT

(11) **EP 2 637 825 B1**
(45) Veröffentlichungstag und Bekanntmachung des Hinweises auf die Patenterteilung: **01.07.2020**
(21) Anmeldenummer: 11776179.1
(22) Anmeldetag: 28.10.2011
(51) Int. Cl.: B25B 27/14, F16B 37/12

(54) **DRAHTGEWINDEEINSATZ MIT ZURÜCKBIEGBAREM EINBAUZAPFEN SOWIE SEINE HERSTELLUNG UND INSTALLATION**
WIRE THREAD INSERT HAVING AN INSTALLATION PIN THAT CAN BE BENT BACK, AND ALSO THE PRODUCTION AND INSTALLATION THEREOF
INSERT DE FILETAGE EN FIL MÉTALLIQUE AVEC TOURILLON DE MONTAGE POUVANT ÊTRE RECOURBÉ, AINSI QUE SA FABRICATION ET SON INSTALLATION

(30) Priorität: 08.11.2010 DE 102010050735
(43) Veröffentlichungstag der Anmeldung: 18.09.2013
(73) Patentinhaber: Böllhoff Verbindungstechnik GmbH, 33649 Bielefeld (DE)
(72) Erfinder: THOMMES, Holger, 33102 Paderborn (DE); MARXKORS, Andreas, 33161 Hövelhof (DE)
(74) Vertreter: Heyer, Volker
(86) Internationale Anmeldenummer: PCT/EP2011/068962
(87) Internationale Veröffentlichungsnummer: WO 2012/062604

(56) Entgegenhaltungen:
- EP-A1- 2 119 921
- DE-B- 1 016 066
- US-A- 2 755 699
- US-A1- 2002 136 615

## Beschreibung

### 1. Gebiet der Erfindung

Die vorliegende Erfindung betrifft einen Drahtgewindeeinsatz zum Einbau in ein Aufnahmegewinde eines Bauteils, ein Bauteil mit einem Aufnahmegewinde, in dem dieser Drahtgewindeeinsatz angeordnet ist, ein Installationswerkzeug für diesen Drahtgewindeeinsatz, ein Installationsverfahren für diesen Drahtgewindeeinsatz in dem Bauteil mit Aufnahmegewinde, ein Herstellungsverfahren für diesen Drahtgewindeeinsatz sowie eine Vorrichtung zum Herstellen dieses Drahtgewindeeinsatzes.

### 2. Hintergrund der Erfindung

Im Stand der Technik sind verschiedene Drahtgewindeeinsätze zum Einbau in einem Aufnahmegewinde eines Bauteils bekannt. Sie sind beispielsweise in US-A-2,363,789, EP-A-0 140 812 und EP-A-0 157 715 beschrieben. Regelmäßig muss der Außendurchmesser der zylindrischen Wände des Drahtgewindeeinsatzes etwas größer als der Außendurchmesser des Aufnahmegewindes des Bauteils gewählt werden. Daher muss der Einbau des Drahtgewindeeinsatzes in das Aufnahmegewinde des Bauteils unter einer Durchmesserverringerung des Drahtgewindeeinsatzes erfolgen. Auf diese Weise wird sichergestellt, dass durch die elastische Rückverformung des Drahtgewindeeinsatzes nach Installation im Aufnahmegewinde ein fester Sitz des Drahtgewindeeinsatzes erzielt wird.

Um das Einschrauben des Drahtgewindeeinsatzes in das Aufnahmegewinde zu erleichtern, wird in bekannter Weise (EP-B 1-0 228 981) eine halbe Windung am Ende der zylindrischen Wendel des Drahtgewindeeinsatzes radial nach innen eingezogen. Der kleinste Außendurchmesser des eingezogenen Abschnitts des Drahtgewindeeinsatzes soll etwa gleich oder etwas größer als der zugehörige Außendurchmesser des Aufnahmegewindes im Bauteil sein. Ferner ist bei diesem bekannten Drahtgewindeeinsatz der Drahtquerschnitt am Ende verjüngt, um das Einschrauben des Drahtgewindeeinsatzes in das Aufnahmegewinde zu erleichtern und Beschädigungen der Gewindebohrung im Bauteil zu vermeiden.

Verschiedene Ausgestaltungen von Drahtgewindeeinsätzen sind auch in EP-B1-0 983 445 offenbart. Dazu gehört beispielsweise der in Fig. 1 dargestellte Drahtgewindeeinsatz 1, der aus einer zylindrischen Wendel 2 mit einer Mehrzahl von schraubenförmig gewickelten Windungen 3 besteht. Eine erste Windung 4 dieser zylindrischen Wendel 2 mündet in einen geradlinig radial in die zylindrische Wendel 2 ragenden Einbauzapfen 6. Mit Hilfe eines geeigneten Installationswerkzeugs wird dieser Einbauzapfen 6 gegriffen und damit der Drahtgewindeeinsatz 1 in das Aufnahmegewinde des Bauteils eingeschraubt. Nach abgeschlossener Installation wird der Einbauzapfen 6 entfernt, indem er mit Hilfe der Sollbruchstelle 5 in der ersten Windung 4 abgebrochen wird. Auf diese Weise entsteht ein Aufnahmegewinde mit einem durchgängig verschraubbaren Drahtgewindeeinsatz.

Bei dieser Konstruktion des Drahtgewindeeinsatzes 1 ist es gerade von Nachteil, dass der Einbauzapfen 6 gebrochen und entsorgt werden muss. Bei der automatischen Installation derartiger Drahtgewindeeinsätze 1 kann es sogar erforderlich sein, den gebrochenen und abgeführten Einbauzapfen 6 zu registrieren. Ein weiterer Nachteil besteht darin, dass der Drahtgewindeeinsatz in einer bestimmten Orientierung in das Aufnahmegewinde des Bauteils eingebaut werden muss. Dies liegt daran, dass der Drahtgewindeeinsatz 1 mit dem Einbauzapfen 6 voraus in das Aufnahmegewinde eingeschraubt werden muss.

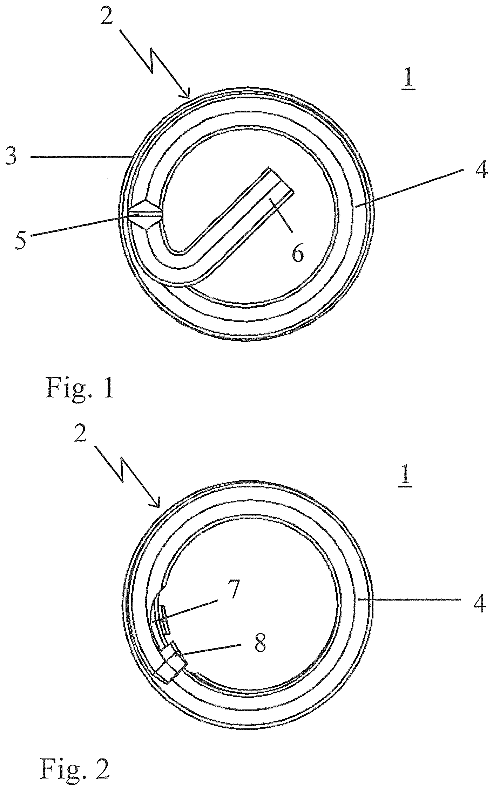

Einen weiteren aus dem Stand der Technik bekannten Drahtgewindeeinsatz 1 zeigt Fig. 2. Im Unterschied zu dem Drahtgewindeeinsatz aus Fig. 1 umfasst der Drahtgewindeeinsatz der Fig. 2 keinen Einbauzapfen. Stattdessen ist in der ersten Windung 4 des Drahtgewindeeinsatzes eine Mitnehmerkerbe 7 vorgesehen. Ein Installationswerkzeug des Drahtgewindeeinsatzes 1 greift in diese Mitnehmerkerbe 7 ein, um den Drahtgewindeeinsatz 1 in das Aufnahmegewinde des Bauteils einzuschrauben. Um diesen Einschraubprozess und auch das Einlaufen des Drahtgewindeeinsatzes 1 in das Aufnahmegewinde zu unterstützen, ist das freie Ende der ersten Windung 4 des Drahtgewindeeinsatzes 1 mit einer Verjüngung 8 ausgestattet. Die Konstruktion des Drahtgewindeeinsatzes 1 gemäß Fig. 2 lässt nur einen sehr aufwändigen automatisierten Einbau im Aufnahmegewinde des Bauteils zu. Bei einer automatisierten Montage wird der Drahtgewindeeinsatz 1 mit Hilfe einer Vorspannpatrone eingesetzt. Das Einsetzen erfordert eine aufwändige Prozesskontrolle. Zudem lässt sich der Drahtgewindeeinsatz 1 der Fig. 2 während der Installation nur begrenzt in seinem Durchmesser verringern, so dass er nach erfolgter Installation im Aufnahmegewinde geringere Haltekräfte aufbringt als beispielsweise der Drahtgewindeeinsatz 1 der Fig. 1.

DE 1 016 066 B offenbart eine Sperrschraube, an der ein Drahtgewindeeinsatz befestigbar ist. Zu diesem Zweck weist die Sperrschraube an einer Stirnseite einen Querschlitz auf, in dem ein radial einwärts gebogener Mitnehmerzapfen des Drahtgewindeeinsatzes aufnehmbar ist. Um die Sperrschraube aus dem Drahtgewindeeinsatz entfernen zu können, ist in der Sperrschraube ein innenliegender Kanal vorgesehen, der am Querschlitz endet. Durch diesen Kanal ist ein Stift steckbar, mit dem der Mitnehmerzapfen aus dem Querschlitz gedrückt wird. Dabei wird der Mitnehmerzapfen weder übermäßig abgebogen, abgebrochen oder bleibend verformt. Nachfolgend kann die Sperrschraube aus dem Drahtgewindeeinsatz entfernt werden.

US 2002/136615 beschreibt die Herstellung eines Drahtgewindeeinsatzes mit einem radial einwärts ragenden Zapfen. Dieser Zapfen ist über eine Sollbruchstelle mit der zylindrischen Wendel des Drahtgewindeeinsatzes verbunden. Nachdem in einem geraden Drahtstück Kerben eingeprägt worden sind, wird der Drahtgewindeeinsatz mit Zapfen aus diesem geraden Drahtstück gewickelt.

US 2,755,699 A beschreibt einen weiteren Drahtgewindeeinsatz und ein dazugehöriges Installationswerkzeug.

Ausgehend von den Drahtgewindeeinsätzen des Standes der Technik ist es das Problem vorliegender Erfindung, einen Drahtgewindeeinsatz bereitzustellen, der mit weniger Aufwand und prozesssicherer verglichen zum Stand der Technik in einem Aufnahmegewinde des Bauteils installierbar ist. Zudem ist es ein Problem vorliegender Erfindung, ein entsprechendes Installationsverfahren, Installationswerkzeug, Herstellungsverfahren und eine Herstellungsvorrichtung für einen derartigen Drahtgewindeeinsatz bereitzustellen.

### 3. Zusammenfassung der Erfindung

Die oben genannten technischen Probleme werden gelöst durch einen Drahtgewindeeinsatz gemäß dem unabhängigen Patentanspruch 1, ein Bauteil mit Aufnahmegewinde, in dem dieser Drahtgewindeeinsatz installiert ist gemäß dem Patentanspruch 7, ein Installationswerkzeug für einen derartigen Drahtgewindeeinsatz gemäß dem unabhängigen Patentanspruch 8 bzw. 12, ein Installationsverfahren dieses Drahtgewindeeinsatzes gemäß dem unabhängigen Patentanspruch 13, ein Herstellungsverfahren dieses Drahtgewindeeinsatzes gemäß dem unabhängigen Patentanspruch 17 sowie durch eine Vorrichtung zum Herstellen dieses Drahtgewindeeinsatzes gemäß dem unabhängigen Patentanspruch 20. Vorteilhafte Ausgestaltungen und Weiterentwicklungen vorliegender Erfindung gehen aus der vorliegenden Beschreibung, den Zeichnungen sowie den anhängenden Ansprüchen hervor.

Der erfindungsgemäße Drahtgewindeeinsatz zum Einbau in einem Aufnahmegewinde eines Bauteils weist die folgenden Merkmale auf: eine zylindrische Wendel bestehend aus einer Mehrzahl von schraubenförmig gewickelten Windungen eines Drahts, die ein erstes und ein zweites Ende umfasst, wobei eine an dem ersten Ende vorgesehene erste Windung einen über einen Biegebereich in ein Inneres der Wendel ragenden Mitnehmerzapfen aufweist und der Mitnehmerzapfen untrennbar mit der ersten Windung verbunden und über den Biegebereich aus dem Inneren der Wendel zurückbiegbar ist.

Die vorliegende Erfindung liefert einen Drahtgewindeeinsatz, der vorteilhaft über seinen Mitnehmerzapfen im Aufnahmegewinde eines Bauteils installierbar ist. Dieser Mitnehmerzapfen ermöglicht das Aufbringen eines ausreichend hohen Drehmoments sowie die beliebige Durchmesserverkleinerung des Drahtgewindeeinsatzes, um die Installation des Drahtgewindeeinsatzes im Aufnahmegewinde zu erleichtern. Im Gegensatz zum Stand der Technik muss der Mitnehmerzapfen nicht vom Drahtgewindeeinsatz entfernt werden. Stattdessen wird der Mitnehmerzapfen über den Biegebereich in den Verlauf der ersten Windung und somit auch in das Aufnahmegewinde des Bauteils zurückgebogen. Zu diesem Zweck ist der Drahtgewindeeinsatz mit Biegebereich und Mitnehmerzapfen derart ausgestaltet, dass der Biegebereich ein Zurückbiegen des Mitnehmerzapfens zulässt, ohne dabei abzubrechen. Zudem ist der Mitnehmerzapfen über den Biegebereich ausreichend stabil mit dem Drahtgewindeeinsatz verbunden, dass ein Einschrauben des Drahtgewindeeinsatzes in das Aufnahmegewinde des Bauteils nicht beeinträchtigt ist.

Die vorliegende Erfindung zeichnet sich weiterhin bevorzugt dadurch aus, dass der Mitnehmerzapfen dauerhaft in das Aufnahmegewinde des Bauteils zurückbiegbar ist. Dieses Zurückbiegen des Mitnehmerzapfens wird mit Hilfe des Installationswerkzeugs des Drahtgewindeeinsatzes realisiert. Während des Zurückbiegens des Mitnehmerzapfens wird eine elastische Rückstellung des Mitnehmerzapfens in das Innere der zylindrischen Wendel des Drahtgewindeeinsatzes verhindert. Dies gewährleistet, dass der Mitnehmerzapfen über die Hüllkontur einer später im Aufnahmegewinde aufzunehmenden Schraube oder über die Hüllkontur eines Gewindelehrdorns hinaus radial nach außen in das Aufnahmegewinde des Bauteils gebogen werden kann und dort verbleibt. Damit ist gewährleistet, dass ein Eindrehmoment einer Schraube im Aufnahmegewinde des Bauteils nur vernachlässigbar beeinflusst wird und eine Lehrenhaltigkeit des Drahtgewindeeinsatzes innerhalb des Aufnahmegewindes des Bauteils gewährleistet ist.

Daher ist es bevorzugt, den Mitnehmerzapfen des Drahtgewindeeinsatzes in Form eines Kreisbogens vorzusehen, dessen Zapfenradius gleich einem Radius der ersten Windung der zylindrischen Wendel ist. Mit Hilfe dieser Formgebung wird sichergestellt, dass der zurückgebogene Mitnehmerzapfen die erste Windung der zylindrischen Wendel fortsetzt.

Es ist weiterhin bevorzugt, dass der Mitnehmerzapfen an seinem freien Ende eine zusammenhängende stirnseitige Stauchfläche aufweist, die in einem Winkel von 90 bis 60° zur Längsachse des Drahts innerhalb einer Radialebene der Wendel angeordnet ist.

Während der Montage des Drahtgewindeeinsatzes wird der Mitnehmerzapfen radial ins Aufnahmegewinde des Bauteils zurückgebogen. Zudem ist es bevorzugt, über die genannte Stauchfläche den Mitnehmerzapfen mit einer Stauchkraft, vorzugsweise tangential zur Längsachse des Drahts, zu beaufschlagen, so dass sich im Biegebereich des Drahtgewindeeinsatzes eine mechanische Spannungsüberlagerung ergibt. Somit wird der Mitnehmerzapfen während des Zurückbiegens in die erste Windung der zylindrischen Wendel des Drahtgewindeeinsatzes über die Stauchfläche gestaucht. Diese Stauchung gewährleistet ein bleibendes Zurückbiegen des Mitnehmerzapfens, so dass der Mitnehmerzapfen nicht oder vernachlässigbar gering elastisch in das Innere der zylindrischen Wendel zurückfedert. Auf diese Weise kann der Mitnehmerzapfen bleibend über die Hüllkontur einer in das Aufnahmegewinde einzusetzenden Schraube und eines Gewindelehrdorns hinaus radial nach außen gebogen und/oder kalibriert werden.

Gemäß des erfindungsgemäßen Drahtgewindeeinsatzes ist der Draht im Biegebereich zwischen erster Windung und Mitnehmerzapfen mechanisch, geometrisch, thermisch, chemisch, auf andere Weise oder gar nicht verändert im Vergleich zum Draht der ersten Windung, so dass ein Zurückbiegen des Mitnehmerzapfens begünstigt ist. In diesem Zusammenhang ist es beispielsweise bevorzugt, den Biegebereich mit einer Rückbiegekerbe auszustatten. Diese Rückbiegekerbe führt auf geometrische Weise zu einer Verringerung des Materialwiderstands im Biegebereich beim Rückbiegen des Mitnehmerzapfens. In einer weiteren Ausgestaltung wird der Biegebereich erhitzt, um die Festigkeit des Drahts im Biegebereich zu verringern und damit die Biegeeigenschaften des Biegebereichs zu verbessern. Somit sind alle Verfahren geeignet, die die Streckgrenze des Drahts im Biegebereich derart herabsetzen, dass ein Zurückbiegen des Mitnehmerzapfens unterstützt wird.

Die vorliegende Erfindung umfasst ebenfalls ein Bauteil mit einem Aufnahmegewinde, in dem ein Drahtgewindeeinsatz gemäß einer der oben beschriebenen Ausführungsformen angeordnet ist.

Zudem offenbart die vorliegende Erfindung ein Installationswerkzeug für den oben beschriebenen Drahtgewindeeinsatz in einem Aufnahmegewinde eines Bauteils, das die folgenden Merkmale aufweist: eine drehbare Einbauspindel mit einem Antriebsende zum Drehen der Einbauspindel und einem Funktionsende zur Installation des Drahtgewindeeinsatzes, wobei das Funktionsende eine Mitnehmerschulter umfasst, mit der der Drahtgewindeeinsatz über den Mitnehmerzapfen in das Aufnahmegewinde eindrehbar ist, und eine Stauchklinge mit einer Fläche, mit der der Mitnehmerzapfen des Drahtgewindeeinsatzes zurückbiegbar ist. Die erfindungsgemäße drehbare Einbauspindel ist mit ihrem Funktionsende derart konstruiert, dass einerseits der Drahtgewindeeinsatz über den Mitnehmerzapfen einfach im Aufnahmegewinde des Bauteils installierbar ist. Andererseits dient die Stauchklinge des Funktionsendes der Einbauspindel dazu, den Mitnehmerzapfen bleibend aus der zylindrischen Wendel des Drahtgewindeeinsatzes zurückzubiegen. Dadurch entfällt die Notwendigkeit des Abbrechens des Mitnehmerzapfens und die damit verbundenen Behinderungen während einer automatisierten Installation.

Dabei ist gemäß Anspruch 8 vorgesehen, dass die Stauchklinge und ihre Fläche in radialer Richtung bezogen auf die Einbauspindel verläuft und über einen Außendurchmesser der Einbauspindel hinausragt, so dass der Mitnehmerzapfen dauerhaft in das Aufnahmegewinde des Bauteils zurückbiegbar ist. Diese Stauchklinge erfasst beim Drehen der Einbauspindel entgegen der Eindrehrichtung des Drahtgewindeeinsatzes in das Aufnahmegewinde die bereits oben beschriebene stirnseitige Stauchfläche des Mitnehmerzapfens. Die Stauchklinge staucht den Mitnehmerzapfen, so dass elastische Rückstellkräfte des Mitnehmerzapfens, im Speziellen des Biegebereichs, in das Innere der zylindrischen Wendel weitestgehend aufgehoben werden und der Mitnehmerzapfen im Aufnahmegewinde des Bauteils verbleibt.

Gemäß einer weiteren bevorzugten Ausführungsform umfasst das Funktionsende des Installationswerkzeugs eine Rückbiegeschulter, mit der bei Drehung der Einbauspindel der Mitnehmerzapfen radial auswärts bewegbar und in Kombination mit der Stauchklinge zurückbiegbar ist. Es ist weiterhin bevorzugt, dass die Einbauspindel am Funktionsende einen Außendurchmesser aufweist, so dass der Drahtgewindeeinsatz aufspindelbar oder auf die Einbauspindel aufsteckbar ist. Gemäß einer weiteren Ausgestaltung des Installationswerkzeugs ist dessen Stauchklinge radial und/oder axial bezogen auf die Einbauspindel bewegbar angeordnet, um in oder aus dem Eingriff mit dem Mitnehmerzapfen zu gelangen.

Die vorliegende Erfindung offenbart zudem ein Installationsverfahren eines Drahtgewindeeinsatzes mit zurückbiegbarem Mitnehmerzapfen mit einem Installationswerkzeug in einem Aufnahmegewinde eines Bauteils, das die folgenden Schritte aufweist:
Aufspindeln oder Aufstecken des Drahtgewindeeinsatzes auf ein Funktionsende einer Einbauspindel des Installationswerkzeugs, Einschrauben des Drahtgewindeeinsatzes in das Aufnahmegewinde durch Drehen der Einbauspindel in eine erste Drehrichtung, Zurückbiegen des Mitnehmerzapfens in das Aufnahmegewinde durch Drehen der Einbauspindel in eine zweite Drehrichtung und Ausspindeln oder Entfernen der Einbauspindel aus dem Drahtgewindeeinsatz mit zurückgebogenem Mitnehmerzapfen.

Zum Einschrauben des Drahtgewindeeinsatzes in das Aufnahmegewinde verriegelt sich vorzugsweise der Mitnehmerzapfen des Drahtgewindeeinsatzes an einer Mitnehmerschulter des Funktionsendes der Einbauspindel, so dass der Drahtgewindeeinsatz durch die Einbauspindel mitdrehbar ist. Die Mitnehmerschulter am Funktionsende der Einbauspindel stellt auf diese Weise sicher, dass ein ausreichend hohes Drehmoment zur Installation des Drahtgewindeeinsatzes im Aufnahmegewinde erreicht wird. Um den Mitnehmerzapfen in das Aufnahmegewinde zurückzubiegen, erfolgt vorzugsweise ein radiales Aufbiegen des Mitnehmerzapfens durch eine Aufbiegeschulter am Funktionsende der Einbauspindel. Das radiale Aufbiegen findet innerhalb einer Radialebene der zylindrischen Wendel des Drahtgewindeeinsatzes statt, wobei der Mitnehmerzapfen durch die Aufbiegeschulter radial auswärts aufgebogen wird.

Die vorliegende Erfindung offenbart zudem ein Herstellungsverfahren des oben beschriebenen Drahtgewindeeinsatzes mit zurückbiegbarem Mitnehmerzapfen. Dieses Herstellungsverfahren weist die folgenden Schritte auf: Bereitstellen eines Drahts mit einem kreisbogenförmig gebogenen freien Ende, Verriegeln des kreisbogenförmig gebogenen Endes an einer Stirnseite einer Wickelspindel und Wickeln des Drahts auf die Wickelspindel, so dass eine zylindrische Wendel bestehend aus einer Mehrzahl von schraubenförmig gewickelten Windungen des Drahts mit einem einwärts bezogen auf die Wendel angeordneten gebogenen Mitnehmerzapfen entsteht, der sich nicht geradlinig radial einwärts erstreckt, und Abschneiden des gewickelten Drahtgewindeeinsatzes, so dass ein weiterer Draht mit einem halbrund gebogenen freien Ende entsteht.

Ein bekannter Draht für Drahtgewindeeinsätze wird mit einem kreisbogenförmig gebogenen Ende an der Wickelspindel befestigt. Vorzugsweise erstreckt sich der Kreisbogen des gebogenen Endes über einen Bogenwinkel von 10° bis 180°, vorzugsweise 30° bis 120°, beginnend im Biegebereich bis zum freien Ende des Mitnehmerzapfens. Die Stirnseite der Wickelspindel ist derart angepasst, dass trotz des Verriegelns und des nachfolgenden Wickelns des Drahts an der Stirnseite des Drahtgewindeeinsatzes ein gebogener und im Inneren der zylindrischen Wendel angeordneter Mitnehmerzapfen entsteht. Im Vergleich zu bekannten Mitnehmerzapfen ist dieser nicht geradlinig radial einwärts bezogen auf das Innere der zylindrischen Wendel des Drahtgewindeeinsatzes geformt. Zudem weist die erste Windung der zylindrischen Wendel auch keine Sollbruchstelle bzw. Kerbe auf, über die der Mitnehmerzapfen später entfernbar wäre.

Gemäß einer bevorzugten Ausgestaltung des Herstellungsverfahrens erfolgt ein Abspindeln des Drahtgewindeeinsatzes von der Wickelspindel vor dem Abschneiden und ein Kippen des Drahtgewindeeinsatzes bezogen auf seine Längsachse im Vergleich zur Längsachse der Wickelspindel. Dieses Vorgehen stellt sicher, dass das Abschneiden des gewickelten Drahtgewindeeinsatzes nachfolgend durch einen Schervorgang mit mindestens einer Klinge, vorzugsweise einer ersten und einer zweiten Klinge, realisierbar ist. Im Vergleich zu bekannten Verfahren wird der Draht des Drahtgewindeeinsatzes nicht abgekniffen, sondern abgeschert bzw. abgeschnitten. Dieses Abschneiden erzeugt am freien Ende des Mitnehmerzapfens eine zusammenhängende stirnseitige Stauchfläche, wie sie oben beschrieben worden ist.

Gemäß des erfindungsgemäßen Herstellungsverfahren erfolgt ein Verändern des Drahts in einem Biegebereich zwischen der ersten Windung des Drahtgewindeeinsatzes und dem Mitnehmerzapfen mechanisch, geometrisch, thermisch, chemisch oder auf andere Weise im Vergleich zum Draht in der ersten Windung, so dass das Zurückbiegen des Mitnehmerzapfens begünstigt ist. Mit Hilfe mechanischer, geometrischer, thermischer, chemischer oder anderer denkbarer Verfahren wird die Festigkeit und/oder Streckgrenze des Drahts im Beigebereich des Drahtgewindeeinsatzes reduziert. Dies gewährleistet ein Zurückbiegen des Mitnehmerzapfens aus dem Inneren der zylindrischen Wendel des Drahtgewindeeinsatzes mit einer geringeren Kraft, im Vergleich zu einem Biegebereich, der nicht verändert worden ist. Ein geometrisches Verändern umfasst beispielsweise ein Verjüngen des Drahts im Biegebereich, während ein thermisches Verändern durch Erhitzen des Drahts im Biegebereich dessen Streckgrenze und/oder Festigkeit herabsetzen kann. Mit gleichem Ziel und gleicher Funktion sind mechanische, chemische oder andere Veränderungen des Drahts im Biegebereich allein oder in Kombination anwendbar.

Zudem offenbart die vorliegende Erfindung eine Vorrichtung zum Herstellen des oben beschriebenen Drahtgewindeeinsatzes, die die folgenden Merkmale aufweist: eine Drahtzufuhr für einen zu wickelnden Draht und eine drehbar angeordnete Wickelspindel mit einer stirnseitigen Verriegelungskonstruktion für den zu wickelnden Draht und eine Schneidkonstruktion mit mindestens einer ersten Klinge, mit der der Draht des gewickelten Drahtgewindeeinsatzes über einen Schervorgang abtrennbar ist. Es ist bevorzugt, die Vorrichtung zur Herstellung des Drahtgewindeeinsatzes mit einer Pointungsanordnung auszustatten. Mit Hilfe dieser Pointungsanordnung wird der Draht des Biegebereichs zwischen der ersten Windung des Drahtgewindeeinsatzes und dem Mitnehmerzapfen mechanisch, geometrisch, thermisch, chemisch oder auf andere Weise im Vergleich zum Draht des übrigen Drahtgewindeeinsatzes verändert, um ein Zurückbiegen des Mitnehmerzapfens zu begünstigen. Eine derartige Pointungsanordnung umfasst beispielsweise eine mechanische Anordnung, um eine Kerbe, vorzugsweise eine runde oder eckige Kerbe oder eine Verjüngung in den Draht des Biegebereichs einzubringen. Gemäß einer weiteren Ausgestaltung umfasst die Vorrichtung zur Herstellung des Drahtgewindeeinsatzes eine thermische Pointungsanordnung, die den Draht des Biegebereichs durch elektrische Induktion, mittels Laser oder eine andere geeignete Wärmequelle erhitzt, so dass das Material des Drahts im Biegebereich derart verändert wird, dass ein späteres Zurückbiegen des Mitnehmerzapfens aus dem Inneren der zylindrischen Wendel des Drahtgewindeeinsatzes unterstützt bzw. erleichtert wird.

### 4. Kurze Beschreibung der begleitenden Zeichnungen

Die vorliegende Erfindung wird unter Bezugnahme auf die begleitende Zeichnung näher erläutert. Es zeigen:
- Fig. 1: einen Drahtgewindeeinsatz des Standes der Technik mit einem radial einwärts ragenden Mitnehmerzapfen und Sollbruchstelle zum Abbrechen des Mitnehmerzapfens,
- Fig. 2: einen Drahtgewindeeinsatz des Standes der Technik mit einer Mitnehmerkerbe am freien Ende des Drahtgewindeeinsatzes,
- Fig. 3: eine bevorzugte Ausführungsform des erfindungsgemäßen Drahtgewindeeinsatzes mit rückbiegbarem Mitnehmerzapfen,
- Fig. 4: der Drahtgewindeeinsatz aus Fig. 3 mit zurückgebogenem Mitnehmerzapfen,
- Fig. 5A: eine weitere Ausführungsform des erfindungsgemäßen Drahtgewindeeinsatzes mit zurückbiegbarem Mitnehmerzapfen,
- Fig. 5B: die Ausführungsform aus Fig. 5A mit einer Darstellung des Zapfenbiegeradius,
- Fig. 6: der Drahtgewindeeinsatz aus Fig. 5 mit zurückgebogenem Mitnehmerzapfen,
- Fig. 7: eine weitere Ausführungsform des erfindungsgemäßen Drahtgewindeeinsatzes mit zurückbiegbarem Mitnehmerzapfen,
- Fig. 8: eine weitere Ausführungsform des erfindungsgemäßen Drahtgewindeeinsatzes mit zurückbiegbarem Mitnehmerzapfen,
- Fig. 9: eine schematische Darstellung einer bevorzugten Ausführungsform der Einbauspindel des Installationswerkzeugs mit darauf befestigtem Drahtgewindeeinsatz mit zurückbiegbarem Mitnehmerzapfen,
- Fig. 10: eine schematische Darstellung einer bevorzugten Konstruktion des Funktionsendes der Einbauspindel,
- Fig. 11: eine schematische Darstellung einer bevorzugten Sequenz während der Installation des erfindungsgemäßen Drahtgewindeeinsatzes,
- Fig. 12: eine Darstellung einer bevorzugten weiteren Sequenz während der Installation des erfindungsgemäßen Drahtgewindeeinsatzes,

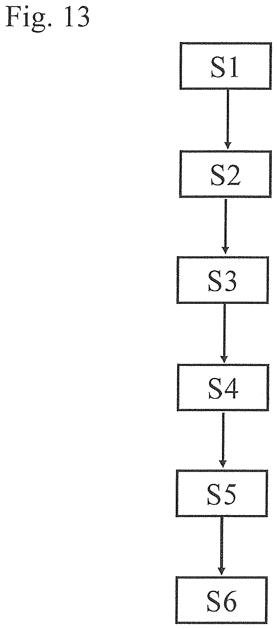

- Fig. 13: ein Flussdiagramm des bevorzugten Installationsverfahrens für den Drahtgewindeeinsatz mit zurückbiegbarem Mitnehmerzapfen,
- Fig. 14: eine schematische Darstellung einer bevorzugten Vorrichtung zur Herstellung des Drahtgewindeeinsatz mit zurückbiegbarem Mitnehmerzapfen,

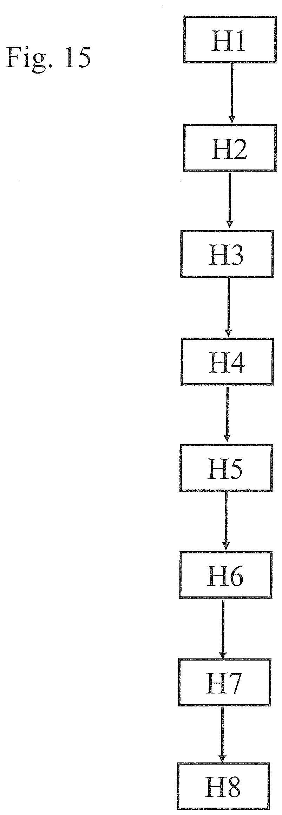

- Fig. 15: ein Flussdiagramm eines bevorzugten Herstellungsverfahrens des Drahtgewindeeinsatzes mit zurückbiegbarem Mitnehmerzapfen
- Fig. 16: eine schematische Darstellung einer bevorzugten Konstruktion des Funktionsendes der Einbauspindel.

### 5. Detaillierte Beschreibung bevorzugter Ausführungsformen

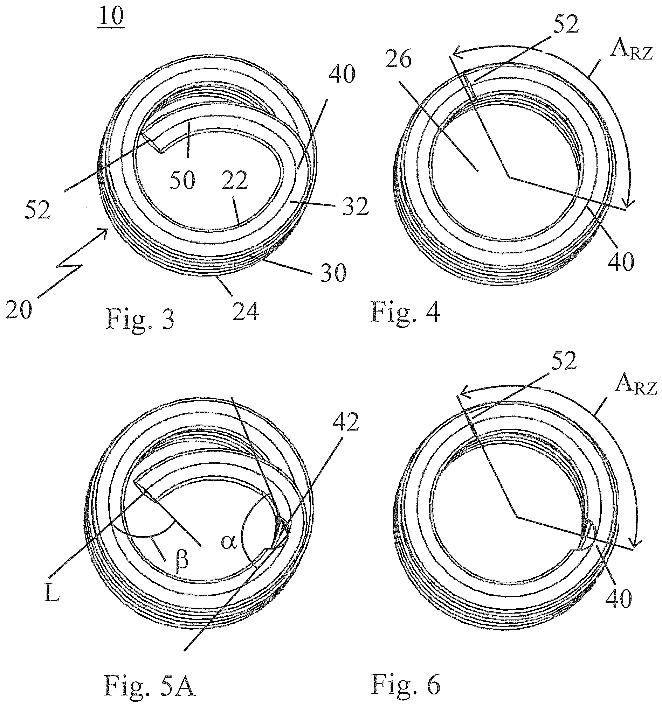

Der erfindungsgemäße Drahtgewindeeinsatz 10 ist aus einem Draht bekannten Materials und bekannter Querschnittsform gewickelt. Bezug nehmend auf die Fig. 3 bis 9 umfasst der Drahtgewindeeinsatz 10 eine zylindrische Wendel 20 bestehend aus einer Mehrzahl von schraubenförmig gewickelten Windungen 30. Die Wendel 20 weist ein erstes Ende 22 und ein zweites Ende 24 auf. Am ersten Ende 22 der zylindrischen Wendel 20 ist ein Mitnehmerzapfen 50 angeordnet, der in einer Radialebene der zylindrischen Wendel 20 in das Innere der zylindrischen Wendel 20 ragt.

Ein Mitnehmerzapfen 50 ist über einen Biegebereich 40 mit einer ersten Windung 32 der zylindrischen Wendel 20 an ihrem ersten Ende 22 verbunden. Der Mitnehmerzapfen 50 ragt nicht geradlinig radial in das Innere der zylindrischen Wendel 20, wie anhand der Fig. 3, 5, 7, 9 zu erkennen ist. Stattdessen hat der Mitnehmerzapfen 50 die Form eines Kreisbogens. Der Kreisbogen des Mitnehmerzapfens 50 besitzt vorzugsweise den gleichen Radius wie die zylindrische Wendel 20, so dass der Mitnehmerzapfen 50 aus dem Inneren der zylindrischen Wendel 20 in den Verlauf der ersten Windung 32 bleibend zurückbiegbar ist. Es ist ebenfalls bevorzugt, den Kreisbogen des Mitnehmerzapfens 50 mit einem Radius auszubilden, der sich maximal mit ± 10 % von dem Radius der zylindrischen Wendel 20 unterscheidet.

Der Biegebereich 40 hat die Funktion, den Mitnehmerzapfen 50 biegbar und zugsteif mit dem Rest des Drahtgewindeeinsatzes 10 zu verbinden. Dadurch ist gewährleistet, dass beim Installieren des Drahtgewindeeinsatzes 10 in einem Aufnahmegewinde A eines Bauteils B ein ausreichend hohes Drehmoment über den Mitnehmerzapfen 50 auf den Drahtgewindeeinsatz 10 aufgebracht werden kann. Basierend auf dieser konstruktiven Grundlage kann der Drahtgewindeeinsatz 10 über den Mitnehmerzapfen 50 in das Aufnahmegewinde A gezogen werden, ohne dass der Mitnehmerzapfen 50 abbricht.

Zudem gewährleistet der Biegebereich 40, dass der Mitnehmerzapfen 50 dauerhaft in das Aufnahmegewinde A des Bauteils B oder allgemein in den Verlauf der ersten Windung 32 zurückbiegbar ist. Dazu weist der Biegebereich 40 die gleichen mechanischen, thermischen, chemischen und geometrischen Eigenschaften wie der Draht der zylindrischen Wendel 20 auf. Mit Hilfe eines geeigneten Installationswerkzeugs (siehe unten) wird beim Zurückbiegen der Mitnehmerzapfen 50 in radialer Richtung aus dem Inneren der zylindrischen Wendel 20 herausgebogen, ohne dass der Mitnehmerzapfen 50 danach elastisch wieder in das Innere der zylindrischen Wendel 20 zurückkehrt. Dieser Zustand ist in den Fig. 4 und 6 veranschaulicht.

Um das Zurückbiegen des Mitnehmerzapfens 50 in das Aufnahmegewinde A oder in den Verlauf der ersten Windung 32 zu unterstützen, ist vorzugsweise der Draht im Biegebereich 40 in seinen Biegeeigenschaften im Vergleich zum Draht der zylindrischen Wendel 20 verändert. Diese Veränderung des Biegebereichs 40 ist gemäß unterschiedlicher Ausführungsformen vorliegender Erfindung mechanisch, geometrisch, thermisch, chemisch oder auf andere Weise erzeugt.

Gemäß einer bevorzugten Ausführungsform ist der Draht des Biegebereichs 40 im Vergleich zum Draht der zylindrischen Wendel 20 in seinem Querschnitt verjüngt. Nach einer Alternative wird dies über eine Kerbe 42, vorzugsweise eine abgerundete oder eckige Kerbe, realisiert. Die Verjüngung oder Kerbe 42 ist derart ausgebildet, dass ein geringer Kerbfaktor beim Zurückbiegen des Mitnehmerzapfens 50 entsteht und daher der Mitnehmerzapfen 50 während des Zurückbiegens nicht abbricht. Es ist weiterhin bevorzugt, die Kerbe 42 an der radialen Innen- oder an der radialen Außenseite des Biegebereichs 40 anzuordnen. Gemäß einer weiteren alternativen Ausgestaltung erfolgt eine einseitige oder eine mehrseitige Querschnittsverjüngung des Biegebereichs 40 um 10 bis 80 %, bevorzugt um ca. 50 %, im Vergleich zum Draht der zylindrischen Wendel 20.

Gemäß einer weiteren nicht gezeigten bevorzugten Ausführungsform des Drahtgewindeeinsatzes 1 ist die Kerbe 42 als Mitnehmerkerbe ausgestaltet. Die Mitnehmerkerbe ist derart geformt und positioniert, dass sie zum Eindrehen des Drahtgewindeeinsatzes 1 in ein Aufnahmegewinde in eine in der Kontur des Eindrehwerkzeugs befindliche Mitnehmerklinge einlaufen kann und sich an dieser formschlüssig verhakt. Ein Beispiel für eine derartige Mitnehmerkerbe zeigt Fig. 2 am Bezugszeichen 7. Aufgrund dieser Form bildet die in Eindrehrichtung des Drahtgewindeeinsatzes 1 vorgelagerte Seite der Mitnehmerkerbe einen Hinterschnitt, an der die Mitnehmerklinge formschlüssig anliegt. Der radial einwärts gebogene Mitnehmerzapfen 50 unterstützt das Eingreifen der Mitnehmerklinge in die Mitnehmerkerbe. Somit realisiert die Mitnehmerkerbe gleichzeitig zwei Funktionen. Einerseits ermöglicht sie das Eingreifen und Verriegeln der Mitnehmerklinge eines Eindrehwerkzeugs für den Drahtgewindeeinsatz. Andererseits stellt sie eine Verjüngung des Beigebereichs 40 dar, der ein Zurückbiegen des Mitnehmerzapfens 50 in das Aufnahmegewinde des Bauteils unterstützt.

Um das mechanische Widerstandsmoment oder das elastische Rückstellmoment des Drahts im Biegebereich 40 zu reduzieren, beispielsweise von bis zu 2000 MPa auf ca. 400 MPa, wird dazu der Biegebereich mechanisch bearbeitet. Geeignete Verfahren umfassen das Kerben, Fräsen, Stanzen, Schmieden, Schleifen, Polieren, Kaltschlagen, Beizen, Läppen, um den Querschnitt des Biegebereichs 40 zu verringern. Gleichzeitig muss gewährleistet sein, dass die Korrosionseigenschaften im Biegebereich 40 nach der Bearbeitung wiederhergestellt werden.

Gemäß der Erfindung ist der Draht des Biegebereichs 50 thermisch oder chemisch oder auf andere Weise verändert, so dass seine Biegefestigkeit im Vergleich zum Draht der zylindrischen Wendel 20 verringert ist. So wird beispielsweise mit einer lokalen thermischen Behandlung des Biegebereichs 40 oder eines Abschnitts des Biegebereichs 40 seine Festigkeit beeinflusst. Auf diese Weise wird die Streckgrenze des Drahts im Biegebereich 40 reduziert, vorzugsweise auf 20 % bis 90 %, weiter bevorzugt auf 20 % bis 40 %. Die thermische Behandlung wird gemäß unterschiedlicher Ausführungsformen durch elektrische Induktion, mittels Laserbestrahlung oder durch Anwendung einer anderen Wärmequelle realisiert.

Gemäß einer Ausgestaltung des Biegebereichs 40, die nicht unter die Erfindung fällt, ist dessen Draht unbehandelt, also weder mechanisch, geometrisch, chemisch, physikalisch oder in anderer Art und Weise verändert, und entspricht in seinen Eigenschaften dem Draht der zylindrischen Wendel 20.

Basierend auf den oben beschriebenen Ausgestaltungen des Biegebereichs 40 und der Form des Mitnehmerzapfens 50 kann der Mitnehmerzapfen 50 eines im Aufnahmegewinde A des Bauteils B installierten Drahtgewindeeinsatzes 10 aus dem Inneren der zylindrischen Wendel 20 herausgebogen werden, so dass das Aufnahmegewinde A mit dem Drahtgewindeeinsatz 10 lehrenhaltig ist. Das bedeutet, dass eine Schraube oder ein Gewindelehrdorn mit einem vernachlässigbar geringen zusätzlichen Drehmoment bzw. Reibmoment aufgrund des zurückgebogenen Mitnehmerzapfens 50 in das Aufnahmegewinde A mit dem Drahtgewindeeinsatz 10 einschraubbar ist. Die Lehrenhaltigkeit des Aufnahmegewindes A mit dem Drahtgewindeeinsatz 10 ist dadurch nachweisbar, dass ein manuelles Eindrehen des Gewindelehrdorns gemäß der Toleranzklasse 6H, vorzugsweise der Toleranzklasse 5H, gewährleistet ist.

Gemäß unterschiedlicher Ausgestaltungen vorliegender Erfindung ist der Mitnehmerzapfen 50 unterschiedlich lang ausgebildet. Im zurückgebogenen Zustand gemäß Fig. 4 und 6 erstreckt sich der Mitnehmerzapfen 50 über einen Kreisbogen A_{RZ} von 10° bis 180°, vorzugsweise 30° bis 120°, beginnend im Biegebereich 40 bis zum freien Ende des Mitnehmerzapfens 50.

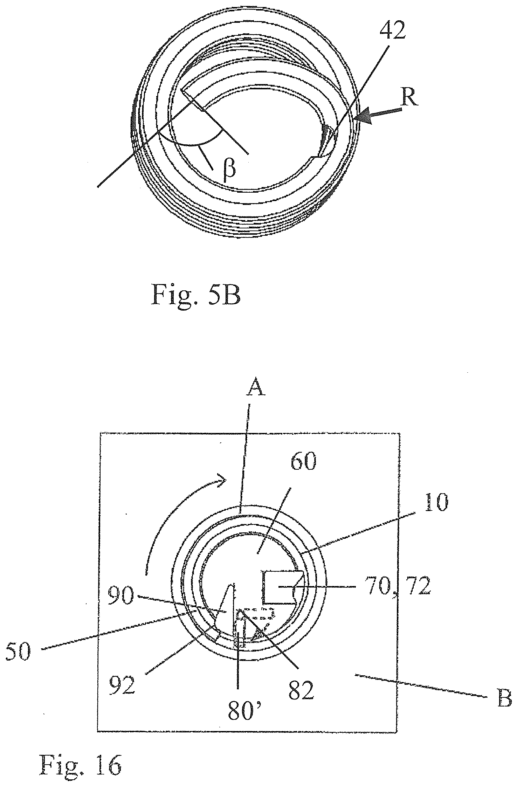

Zudem weist der Biegebereich 40 einen bestimmten Zapfenbiegeradius auf. Die Größe des Zapfenbiegeradius bestimmt, an welcher Position im Inneren der zylindrischen Wendel 20 der Mitnehmerzapfen 50 angeordnet ist. Es ist bevorzugt, den Zapfenbiegeradius in der Art zu wählen, dass der Mitnehmerzapfen 50 und die erste Windung 32 einen Winkel α von 20° bis 50°, vorzugsweise 60° bis 90°, einschließen (vergleiche Fig. 5A). Alternativ dazu ist es ebenfalls bevorzugt, den Zapfenbiegeradius R des Mitnehmerzapfens 50 gezielt einzustellen. Der Zapfenbiegeradius R (vgl. Fig. 5B) beschreibt den Radius, mit dem der Mitnehmerzapfen 50 radial nach innen gebogen ist. Dieser Zapfenbiegeradius R wird beispielsweise mit Hilfe von Radienlehren gemessen. Der Zapfenbiegeradius R hat eine Größe von 0,5 P ≤ R ≤ 0,45 D_{A}. In dieser Formel bezeichnet P die Steigung des Drahts in der Wendel 20 und D_{A} den Außendurchmesser der Wendel 20.

Der Mitnehmerzapfen 50 weist des Weiteren bevorzugt an der Stirnseite seines freien Endes eine zusammenhängende Stauchfläche 52 auf. Die Stauchfläche 52 ist einheitlich ausgebildet, so dass sie in einem gemeinsamen Winkel β zur Längsachse L des Drahts des Mitnehmerzapfens 50 ausgerichtet ist. Der Winkel β ist beispielsgebend in Fig. 5 dargestellt. Der Winkel β beträgt 80° bis 130° zur Längsachse L des Drahts des Mitnehmerzapfens 50 innerhalb einer Radialebene der zylindrischen Wendel 20.

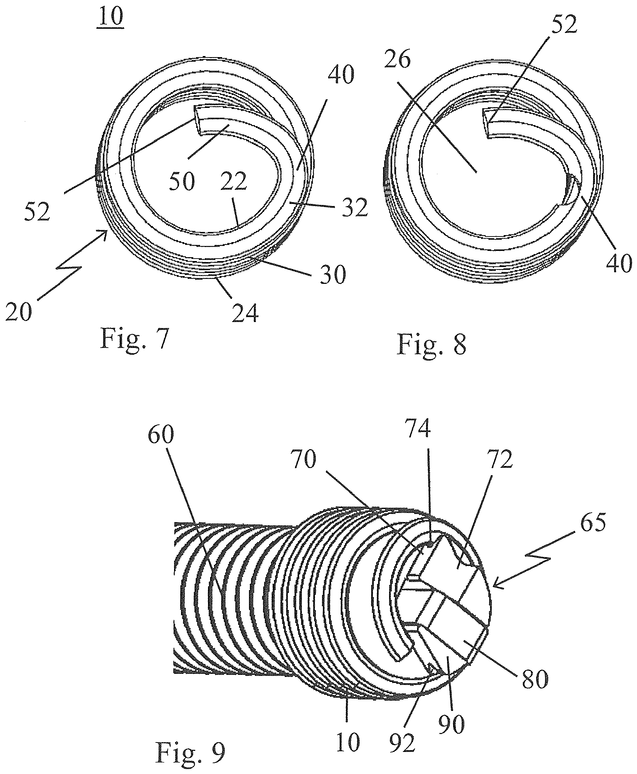

Bezug nehmend auf die Fig. 7 und 8 ist der Mitnehmerzapfen 50 kürzer ausgebildet im Vergleich zu den Fig. 3 und 4. Zudem stellen die Fig. 3, 4 und 7 einen Drahtgewindeeinsatz 10 dar, dessen Biegebereich 40 elektrisch, chemisch, thermisch oder gar nicht verändert worden ist. In den Fig. 4 und 6 ist der Mitnehmerzapfen 50 bleibend in die erste Windung 32 zurückgebogen, ohne in das Innere der zylindrischen Wendel 20 elastisch zurückzufedern.

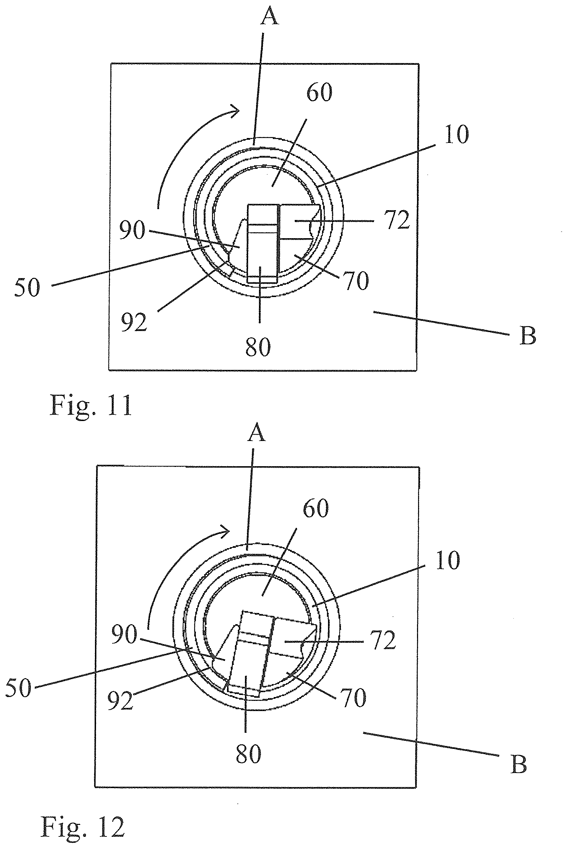

Die vorliegende Erfindung umfasst zudem das Bauteil B mit Aufnahmegewinde A, in dem der oben beschriebene Drahtgewindeeinsatz 10 installiert ist. Im installierten Zustand ist der Mitnehmerzapfen 50 zurückgebogen oder noch im Inneren der zylindrischen Wendel 20 angeordnet. Beispielgebend zeigen die Fig. 11 und 12 das Bauteil A mit installiertem Drahtgewindeeinsatz 10.

Der Drahtgewindeeinsatz 10 wird mit Hilfe eines Installationswerkzeugs im Aufnahmegewinde A des Bauteils B installiert. Das Installationswerkzeug umfasst eine drehbare Einbauspindel 60 mit einem Antriebsende zum Drehen der Einbauspindel 60 und einem Funktionsende 65 zur Installation des Drahtgewindeeinsatzes 10. Das Funktionsende 65 der Einbauspindel 60 ist in Fig. 9 in einer bevorzugten Ausführungsform dargestellt. Auf die Einbauspindel 60, im Speziellen auf das Funktionsende 65, wurde hier bereits ein Drahtgewindeeinsatz 10 aufgespindelt oder aufgesteckt (Schritt S1). Zu diesem Zweck umfasst die Einbauspindel 60 an ihrem Funktionsende 65 einen an den Innendurchmesser des Drahtgewindeeinsatzes 10 angepassten Außendurchmesser, so dass der Drahtgewindeeinsatz 10 auf die Einbauspindel 60 aufspindelbar oder aufsteckbar ist.

Das Funktionsende 65 befindet sich bevorzugt an der Stirnseite der Einbauspindel 60. Es umfasst eine Mitnehmerschulter 70, mit der der Drahtgewindeeinsatz 10 über den Mitnehmerzapfen 50 in das Aufnahmegewinde A eindrehbar ist. Zudem umfasst das Funktionsende 65 eine Stauchklinge 80, mit der der Mitnehmerzapfen 50 des Drahtgewindeeinsatzes 10 zurückbiegbar ist. Vorzugsweise wirkt die Stauchklinge 80 mit einer Rückbiegeschulter 90 zusammen.

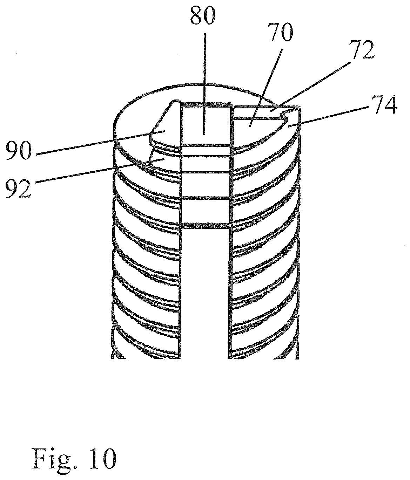

Am Ende des Aufspindelns oder Aufsteckens des Drahtgewindeeinsatzes auf die Einbauspindel 60 (Schritt S1) verriegelt (Schritt S2) sich bevorzugt der Mitnehmerzapfen 50 hinter der Mitnehmerschulter 70. Um das Verriegeln (Schritt S2) zu unterstützen und ein problemloses Auflaufen des Mitnehmerzapfens 50 auf die Mitnehmerschulter 70 zu gewährleisten, ist vorzugsweise an der Mitnehmerschulter 70 eine Auflaufschräge 72 angeordnet (siehe Fig. 9 und 10). Der Mitnelunerzapfen 50 wird beim weiteren Aufdrehen auf die Einbauspindel 60 elastisch verformt und gleitet stirnseitig über die Mitnehmerschulter 70, die Stauchklinge 80sowie über die Rückbiegeschulter 90. Um ein widerstandsarmes Gleiten des Mitnehmerzapfens 50 zu erzielen, werden die Kanten der genannten Kontaktflächen am Funktionsende 65 der Einbauspindel 60 derart gebrochen, dass ein Einhaken oder Verklemmen des Mitnehmerzapfens verhindert ist. Aufgrund der Elastizität des Mitnehmerzapfens 50 schnappt dieser hinter der Mitnehmerschulter 70 der Einbauspindel 60 in eine spannungsfreie Position ein und ist somit verriegelt.

Der aufgespindelte oder aufgesteckte Drahtgewindeeinsatz 10 wird an das Aufnahmegewinde A angesetzt. Durch die Einwindung der ersten Windung 32 im Biegebereich 40 ist ein optimaler Einlauf des Drahtgewindeeinsatzes 10 in das Aufnahmegewinde A gewährleistet. Das Eindrehen (Schritt S3) des Drahtgewindeeinsatzes 10 in das Aufnahmegewinde A erfolgt durch eine rotierende Bewegung der Einbauspindel 60 über das Einbauwerkzeug. Bei einem Drahtgewindeeinsatz 10 für ein Rechtsgewinde erfolgt das Eindrehen im Uhrzeigersinn. Für ein Linksgewinde wird die Einbauspindel 60 entsprechend gegen den Uhrzeigersinn gedreht, um den Drahtgewindeeinsatz 10 zu installieren.

Beim Eindrehen des Drahtgewindeeinsatzes 10 in das Aufnahmegewinde A liegt der Mitnehmerzapfen 50 an der Mitnehmerschulter 70 des Funktionsendes 65 an. Dies gewährleistet eine optimale Übertragung des aufzubringenden Drehmoments, wodurch der Drahtgewindeeinsatz 10 in die gewünschte Tiefenposition im Aufnahmegewinde A gebracht wird. Zur besseren Befestigung des Mitnehmerzapfens 50 an der Mitnehmerschulter 70 weist diese eine Mitnehmerkerbe 74 auf. Der Mitnehmerzapfen 50 schnappt in diese Mitnehmerkerbe 74 ein, wodurch eine zusätzliche Stabilität zur Drehmomentübertragung auf den Drahtgewindeeinsatz 10 erlangt wird.

Die Tiefenposition des Drahtgewindeeinsatzes 10 ist abhängig von der Länge des Drahtgewindeeinsatzes 10 sowie der gewünschten Endlage des Drahtgewindeeinsatzes im Aufnahmegewinde A über einen einstellbaren Tiefenanschlag anpassbar. Nach Erreichen der Tiefenposition wird die Einbauspindel 60 linksdrehend aus dem Drahtgewindeeinsatz 10 geschraubt (Schritte S4 bis S6). Unmittelbar nach dem Drehrichtungswechsel der Einbauspindel 60 löst sich die Mitnehmerschulter 70 vom Mitnehmerzapfen 50, und der Mitnehmerzapfen 50 wird von der Rückbiegeschulter 90 durch ihre Geometrie radial aufgebogen (Schritt S4). Der durch die Rückbiegeschulter 90 erzielte aufgebogene Zustand ist in Fig. 11 dargestellt. In diesem Zustand wird der Mitnehmerzapfen 50 zwischen dem Aufnahmegewinde A und der Kerbe 92 der Rückbiegeschulter geführt.

Durch weiteres Drehen der Einbauspindel 60 entgegen dem Uhrzeigersinn kommt die Stauchfläche 52 des Mitnehmerzapfens 50 in Anlage an der Stauchklinge 80 (vergleiche Fig. 12). Zu diesem Zweck verläuft die Stauchklinge 80 in radialer Richtung bezogen auf die Einbauspindel 60 und erstreckt sich über einen Außendurchmesser der Einbauspindel 60 hinaus. Basierend auf dieser Konstruktion ist der Mitnehmerzapfen 50 dauerhaft in das Aufnahmegewinde des Bauteils B zurückbiegbar.

Wird die Einbauspindel 60 weiter in Pfeilrichtung gemäß Fig. 11 und 12 gedreht, wird der Mitnehmerzapfen 50 durch die Stauchklinge 80 über die Stauchfläche 52 gestaucht (Schritt S5). Damit der Mitnehmerzapfen 50 nicht der Stauchkraft ausweicht, wird er vorzugsweise zwischen dem Aufnahmegewinde A und der Kerbe 92 der Rückbiegeschulter 90 gehalten. Aufgrund der mit der Biegebeanspruchung überlagernden stauchenden Kraftbeaufschlagung des Mitnehmerzapfens 50 wird im Biegebereich 40 ein mehr-axialer Spannungszustand erzeugt. Mit Hilfe des mehr-axialen Spannungszustands wird bevorzugt die Werkstoffstreckgrenze des Drahts im Biegebereich deutlich überschritten, so dass der Mitnehmerzapfen 50 bleibend ins Aufnahmegewinde A bzw. in die Fortsetzung der ersten Windung 32 zurückgebogen wird. Dabei wird die erste Windung 32 aber nicht beschädigt.

Nach Abschluss des Stauchens im Schritt S5 wird die Stauchklinge 80 aus dem Eingriff mit der Stauchfläche 52 gelöst und die Einbauspindel 60 ausgespindelt oder auf andere Weise aus dem Drahtgewindeeinsatz 10 entfernt.

Eine weitere bevorzugte Ausführungsform der Einbauspindel 60 ist in Figur 16 dargestellt. Diese Ausführungsform arbeitet in gleicher Weise, wie es oben beschrieben worden ist. Im Unterschied zur oben beschriebenen Einbauspindel 60 ist die Stauchklinge 80' tangential in die Umfangskontur des einzubauenden Drahtgewindeeinsatzes einschwenkend angeordnet. Zu diesem Zweck ist die Stauchklinge 80' schwenkbar um den Punkt 82 angeordnet. Gemäß einer Ausführungsform ist die Stauchklinge 80' mit einer Drehachse verbunden, die sich axial in der Einbauspindel 60 erstreckt und über ein Antriebsmittel antreibbar ist. Da der Punkt 82 außermittig bezogen auf die Stirnfläche der Einbauspindel angeordnet ist, erreicht bei einer Schwenkbewegung das radial äußere Ende der Stauchklinge 80' die Hüllkurve des Bauteilgewindes. In einem Einbauvorgang eines Drahtgewindeeinsatzes erfasst beim Rückdrehen der Einbauspindel 60 die Stauchklinge 80' die Stauchfläche 52 des Mitnehmerzapfens 50, nachdem die Rückbiegeschulter 90 den Mitnehmerzapfen 50 nach außen gebogen hat. Zu diesem Zweck wird die Stauchklinge 80' aus der gestrichelt dargestellten Position in die mit durchgezogenen Linien veranschaulichte Position gedreht (siehe Fig. 16). Da die Stauchklinge 80' in der mit durchgezogenen Linien veranschaulichte Position fest ist, staucht ein Drehen der Einbauspindel 60 in Pfeilrichtung den Mitnehmerzapfen 50, so dass dieser bleibend zurück gebogen wird.

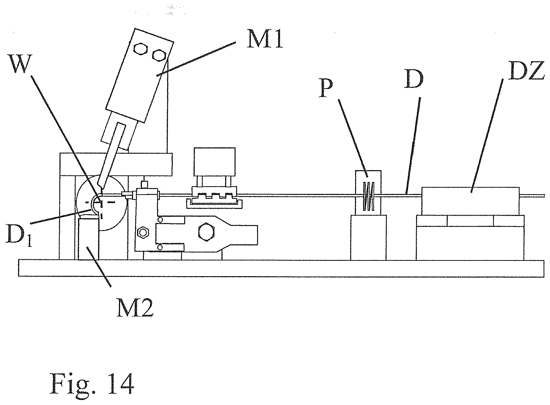

Der Drahtgewindeeinsatz 10 wird mit einer Vorrichtung hergestellt, die gemäß einer Ausführungsform in Fig. 14 dargestellt ist. Über eine Drahtzufuhr DZ ist ein zu wickelnder Draht D einer drehbar angeordneten Wickelspindel W zuführbar. Die Wickelspindel W umfasst an ihrem stirnseitigen Ende eine Verriegelungskonstruktion (nicht gezeigt). Die Verriegelungskonstruktion ist derart ausgebildet, dass ein kreisbogenförmig gebogenes Ende D₁ des zu wickelnden Drahts D an der Stirnseite der Wickelspindel W zum Wickeln des Drahtgewindeeinsatzes verriegelbar ist (Schritt H2). Vorzugsweise erstreckt sich das kreisbogenförmig gebogene Ende D₁ des Drahts D über einen Bogenwinkel von 10° bis 180°, vorzugsweise 30° bis 120°. Dieser Kreisbogen beginnt im späteren Biegebereich des Drahtgewindeeinsatzes bzw. am Ende des geraden Abschnitts des zu wickelnden Drahts D. Dieser Kreisbogen endet am freien Ende des kreisbogenförmig gebogenen Endes D₁ bzw. am freien Ende des späteren Mitnehmerzapfens.

Nach dem Bereitstellen des zu wickelnden Drahts D mit kreisbogenförmig gebogenem Ende D₁ (Schritt H1) und dem Verriegeln des kreisbogenförmig gebogenen Endes D₁ an der Wickelspindel W (H2), wickelt die Wickelspindel W den Draht D auf (Schritt H3). Durch Drehen der Wickelspindel W entsteht die zylindrische Wendel 20 bestehend aus der Mehrzahl von schraubenförmig gewickelten Windungen 30 (siehe oben). Das Verriegeln des halbrunden Endes D₁ des Drahts D führt dazu, dass bereits zu Beginn des Wickelvorgangs der Mitnehmerzapfen 50 (siehe oben) gebildet wird.

Nachdem der Drahtgewindeeinsatz fertig gewickelt worden ist, wird er von der Wickelspindel W abgespindelt (Schritt H4). Zu diesem Zweck dreht sich die Wickelspindel W entgegen der zuvor genutzten Wickelrichtung.

Nun ist der Drahtgewindeeinsatz nur noch mit dem endlosen Draht D verbunden und muss von diesem abgeschnitten werden. Mit dem Abschneiden (Schritt H6) des Drahtgewindeeinsatzes werden bevorzugt zwei Ziele erreicht. Einerseits werden zum Abschneiden (H6) ein Ober- M1 und ein Untermesser M2 genutzt, die über eine Scherbewegung den Drahtgewindeeinsatz abschneiden. Im Gegensatz zu einem Abkneifen erzeugt das Abschneiden (H6) eine durchgängige Fläche, die im nachfolgend zu wickelnden Drahtgewindeeinsatz die Stauchfläche 52 am Mitnehmerzapfen 50 bildet (siehe oben).

Andererseits wird mit dem Ober- M1 und Untermesser M2 der Drahtgewindeeinsatz derart abgeschnitten, dass ein halbrundes freies Ende des Drahts D stehenbleibt. Zu diesem Zweck wird der Drahtgewindeeinsatz vor dem Abschneiden (H6) bezogen auf seine Längsachse und im Vergleich zur Längsachse der Wickelspindel W bevorzugt gekippt (Schritt H5). Auf diese Weise wird das zu schneidende Ende des Drahtgewindeeinsatzes für die Messer M1 und M2 frei zugänglich.

Während der abgeschnittene Drahtgewindeeinsatz abgeführt wird (Schritt H7), wird das halbrunde Ende des Drahts D an der Stirnseite der Wickelspindel W verriegelt (Schritt Hl und H2), um einen weiteren Drahtgewindeeinsatz zu wickeln.

Die Vorrichtung zur Herstellung des Drahtgewindeeinsatzes umfasst zudem vorzugsweise eine Pointungsanordnung P, mit der der Draht des Biegebereichs 40 zwischen der ersten Windung 32 des Drahtgewindeeinsatzes 10 und dem Mitnehmerzapfen 50 mechanisch, geometrisch, thermisch, chemisch oder auf andere Weise im Vergleich zum Draht des übrigen Drahtgewindeeinsatzes 10 veränderbar ist, um ein Zurückbiegen des Mitnehmerzapfens 50 zu begünstigen. Die Veränderungen des Drahts im Biegebereich 40 und somit auch die Pointungsanordnung P sind optional. Die mit diesen Veränderungen des Drahts im Biegebereich verbundenen Vorteile sind oben beschrieben.

Die Pointungsanordnung P ist derart angeordnet, dass während der Herstellung des ersten Drahtgewindeeinsatzes bereits das Pointen bzw. Verändern des Drahts an der Stelle des Biegebereichs 40 des nachfolgend zu wickelnden Drahtgewindeeinsatzes erfolgt. Die Pointunganordnung umfasst zu diesem Zweck bevorzugt mechanische Vorrichtungen zum Fräsen, Stanzen oder dergleichen, wie sie oben erläutert worden sind. Diese fügen beispielsweise eine abgerundete Kerbe oder eine Verjüngung in den späteren Biegebereich des nachfolgend zu wickelnden Drahtgewindeeinsatzes ein.

Alternativ umfasst die Pointungsanordnung einen Induktor, um die Eigenschaften des Drahts im späteren Biegebereich 40 thermisch zu verändern. Es ist ebenfalls denkbar, die Pointungsanordnung P mit anderen Wärmequellen oder mechanischen Bearbeitungsvorrichtungen vorzusehen, um den Draht im späteren Biegebereich 40 auf geeignete Weise zu verändern.

## Patentansprüche

1. Drahtgewindeeinsatz (10) zum Einbau in einem Aufnahmegewinde (A) eines Bauteils (B), der die folgenden Merkmale aufweist:
a. eine zylindrische Wendel (20) bestehend aus einer Mehrzahl von schraubenförmig gewickelten Windungen (30) eines Drahts, die ein erstes (22) und ein zweites Ende (24) umfasst, wobei
b. eine an dem ersten Ende (22) vorgesehene erste Windung (32) einen über einen Biegebereich (40) in ein Inneres (26) der Wendel (20) ragenden Mitnehmerzapfen (50) aufweist und
c. der Mitnehmerzapfen (50) untrennbar mit der ersten Windung (32) verbunden und über den Biegebereich (40) aus dem Inneren (26) der Wendel (20) radial nach außen in das Aufnahmegewinde (A) zurückbiegbar ist, wobei
d. der Draht im Biegebereich (40) zwischen erster Windung (32) und Mitnehmerzapfen (50) mechanisch, geometrisch, thermisch, chemisch oder auf andere Weise verändert ist im Vergleich zum Draht der ersten Windung, so dass ein Zurückbiegen des Mitnehmerzapfens (50) begünstigt ist.

2. Drahtgewindeeinsatz (10) gemäß Anspruch 1, dessen Mitnehmerzapfen (50) dauerhaft in das Aufnahmegewinde (A) des Bauteils (B) zurückbiegbar ist.

3. Drahtgewindeeinsatz (10) gemäß Anspruch 1 oder 2, dessen Mitnehmerzapfen (50) ein Kreisbogen ist, dessen Zapfenradius annähernd gleich einem Radius der ersten Windung (32) der zylindrischen Wendel (20) ist.

4. Drahtgewindeeinsatz (10) gemäß einem der vorhergehenden Ansprüche, der an einer radialen Innenseite des Biegebereichs (40) eine als Mitnehmerkerbe (7) ausgestaltete Kerbe (42) aufweist.

5. Drahtgewindeeinsatz (10) gemäß einem der vorhergehenden Ansprüche, dessen Mitnehmerzapfen (50) so lang ausgebildet ist, dass er im zurückgebogenen Zustand eine Länge aufweist, die sich über einen Kreisbogen mit einem Winkel von 10° bis 180° beginnend im Biegebereich (40) bis zu einem freien Ende des Mitnehmerzapfens (50) erstreckt.

6. Drahtgewindeeinsatz (10) gemäß einem der vorhergehenden Ansprüche, dessen Mitnehmerzapfen (50) an seinem freien Ende eine zusammenhängende stirnseitige Stauchfläche aufweist, die in einem Winkel von 80 ° bis 130 ° zur Längsachse des Drahts innerhalb einer Radialebene der Wendel (20) angeordnet ist.

7. Bauteil (B) mit einem Aufnahmegewinde (A), in dem ein Drahtgewindeeinsatz (10) nach einem der vorhergehenden Ansprüche angeordnet ist.

8. Installationswerkzeug für einen Drahtgewindeeinsatz (10) gemäß einem der Ansprüche 1 bis 6 in einem Aufnahmegewinde (A) eines Bauteils (B), das die folgenden Merkmale aufweist:
a. eine drehbare Einbauspindel (60) mit einem Antriebsende zum Drehen der Einbauspindel (60) und einem Funktionsende (65) zur Installation des Drahtgewindeeinsatzes (10), wobei
b. das Funktionsende (65) eine Mitnehmerschulter (70) umfasst, mit der der Drahtgewindeeinsatz (10) über den Mitnehmerzapfen (50) in das Aufnahmegewinde (A) eindrehbar ist, und eine Stauchklinge (80), mit der der Mitnehmerzapfen (50) des Drahtgewindeeinsatzes (10) zurückbiegbar ist, wobei die Stauchklinge (80) in radialer Richtung verläuft und über einen Außendurchmesser der Einbauspindel (60) hinaus ragt, so dass der Mitnehmerzapfen (50) dauerhaft in das Aufnahmegewinde (A) des Bauteils (B) zurückbiegbar ist.

9. Installationswerkzeug gemäß Anspruch 8, dessen Funktionsende (65) eine Rückbiegeschulter (90) aufweist, mit der bei Drehung der Einbauspindel (60) der Mitnehmerzapfen (50) radial auswärts bewegbar und in Kombination mit der Stauchklinge (80) zurückbiegbar ist.

10. Installationswerkzeug gemäß einem der Ansprüche 8 bis 9, dessen Einbauspindel (60) am Funktionsende (65) einen Außendurchmesser aufweist, so dass der Drahtgewindeeinsatz (10) aufspindelbar oder aufsteckbar ist.

11. Installationswerkzeug gemäß einem der Ansprüche 8 bis 10, dessen Stauchklinge (80) radial und/oder axial bezogen auf die Einbauspindel (60) bewegbar angeordnet ist, um in oder aus dem Eingriff mit dem Mitnehmerzapfen (50) zu gelangen.

12. Installationswerkzeug für einen Drahtgewindeeinsatz (10) gemäß einem der Ansprüche 1 bis 6 in einem Aufnahmegewinde (A) eines Bauteils (B), das die folgenden Merkmale aufweist:
a. eine drehbare Einbauspindel (60) mit einem Antriebsende zum Drehen der Einbauspindel (60) und einem Funktionsende (65) zur Installation des Drahtgewindeeinsatzes (10), wobei
b. das Funktionsende (65) eine Mitnehmerschulter (70) umfasst, mit der der Drahtgewindeeinsatz (10) über den Mitnehmerzapfen (50) in das Aufnahmegewinde (A) eindrehbar ist, und eine Stauchklinge (80), mit der der Mitnehmerzapfen (50) des Drahtgewindeeinsatzes (10) zurückbiegbar ist, wobei die Stauchklinge (80') schwenkbar um einen außermittig angeordneten Punkt bezogen auf eine Stirnfläche der Einbauspindel angeordnet ist.

13. Installationsverfahren eines Drahtgewindeeinsatzes (10) mit zurückbiegbarem Mitnehmerzapfen (50) gemäß einem der Ansprüche 1 bis 6 mit einem Installationswerkzeug gemäß einem der Ansprüche 8 bis 12 in einem Aufnahmegewinde (A) eines Bauteils (B), das die folgenden Schritte aufweist:
a. Aufspindeln oder Aufstecken (S1) des Drahtgewindeeinsatzes (10) auf ein Funktionsende (65) einer Einbauspindel (60) des Installationswerkzeugs,
b. Einschrauben des Drahtgewindeeinsatzes (10) in das Aufnahmegewinde (A) durch Drehen der Einbauspindel (60) in eine erste Drehrichtung,
c. Zurückbiegen des Mitnehmerzapfens (50) in das Aufnahmegewinde (A) durch Drehen der Einbauspindel (60) in eine zweite Drehrichtung und
d. Ausspindeln oder Entfernen (S6) der Einbauspindel (60) aus dem Drahtgewindeeinsatz (10) mit zurückgebogenem Mitnehmerzapfen (50).

14. Installationsverfahren gemäß Anspruch 13, das weiterhin aufweist:
Verriegeln (S2) des Mitnehmerzapfens (50) des Drahtgewindeeinsatzes (10) an einer Mitnehmerschulter (70) des Funktionsendes (65) der Einbauspindel (60), so dass der Drahtgewindeeinsatz (10) durch die Einbauspindel (60) mitdrehbar ist.

15. Installationsverfahren gemäß Anspruch 13 oder 14, das weiterhin aufweist:
radiales Aufbiegen (S4) des Mitnehmerzapfens (50) durch eine Aufbiegeschulter am Funktionsende (65) der Einbauspindel (60).

16. Installationsverfahren gemäß einem der Ansprüche 13 bis 15, das weiterhin aufweist:
Stauchen (S5) des Mitnehmerzapfens (50) über eine Stauchklinge des Funktionsendes (65) der Einbauspindel (60), so dass der Mitnehmerzapfen (50) im Aufnahmegewinde (A) des Bauteils (B) angeordnet ist.

17. Herstellungsverfahren eines Drahtgewindeeinsatzes (10) mit zurückbiegbarem Mitnehmerzapfen (50) gemäß einem der Patentansprüche 1 bis 6, das die folgenden Schritte aufweist:
a. Bereitstellen eines Drahts mit einem kreisbogenförmig gebogenen freien Ende,
b. Verriegeln des kreisbogenförmig gebogenen Endes an einer Stirnseite einer Wickelspindel und Wickeln des Drahts auf die Wickelspindel, so dass eine zylindrische Wendel (20) bestehend aus einer Mehrzahl von schraubenförmig gewickelten Windungen (30) des Drahts mit einem einwärts bezogen auf die Wendel (20) angeordneten gebogenen Mitnehmerzapfen (50) entsteht, der sich nicht geradlinig radial einwärts erstreckt,
c. Abschneiden des gewickelten Drahtgewindeeinsatzes (10), so dass ein weiterer Draht mit einem kreisbogenförmig gebogenen freien Ende entsteht und
d. Verändern des Drahts in einem Biegebereich (40) zwischen einer ersten Windung (32) des Drahtgewindeeinsatzes (10) und dem Mitnehmerzapfen (50) mechanisch, geometrisch, thermisch, chemisch oder auf andere Weise im Vergleich zum Draht der ersten Windung, so dass ein Zurückbiegen des Mitnehmerzapfens (50) begünstigt ist.

18. Herstellungsverfahren gemäß Anspruch 17, das weiterhin aufweist:
Abspindeln des Drahtgewindeeinsatzes (10) von der Wickelspindel vor dem Abschneiden und Kippen des Drahtgewindeeinsatzes (10) bezogen auf seine Längsachse im Vergleich zur Längsachse der Wickelspindel.

19. Herstellungsverfahren gemäß Anspruch 17 oder 18, das weiterhin aufweist:
Abschneiden des gewickelten Drahtgewindeeinsatzes (10) durch einen Schervorgang mit mindestens einer Klinge, vorzugsweise einer ersten und einer zweiten Klinge.

20. Vorrichtung, mit der ein Drahtgewindeeinsatz (10) gemäß einem der Ansprüche 1 bis 6 herstellbar ist, die die folgenden Merkmale aufweist:
a. eine Drahtzufuhr für einen zu wickelnden Draht und eine drehbar angeordnete Wickelspindel mit einer stirnseitigen Verriegelungskonstruktion für den zu wickelnden Draht und
b. eine Schneidkonstruktion mit mindestens einer ersten Klinge, mit der der Draht des gewickelten Drahtgewindeeinsatzes (10) über einen Schervorgang abtrennbar ist sowie
c. eine Pointungsanordnung, mit der der Draht eines Biegebereichs zwischen einer erster Windung (32) des Drahtgewindeeinsatzes (10) und dem Mitnehmerzapfen (50) mechanisch, geometrisch, thermisch, chemisch oder auf andere Weise im Vergleich zum Draht des übrigen Drahtgewindeeinsatzes (10) veränderbar ist, um ein Zurückbiegen des Mitnehmerzapfens (50) zu begünstigen.

## Claims

1. Wire thread insert (10) for mounting in a receiving thread (A) of a component (B), the wire thread insert (10) having the following features:
a. a cylindrical helix (20) having a plurality of helically wound coils (30) of a wire, the helix (20) having a first (22) and a second end (24), wherein
b. a first coil (32) provided at the first end (22) has a moving tang (50) projecting into an interior (26) of the helix (20) via a bending portion (40) and
c. the moving tang (50) is inseparably connected to the first coil (32) and redressable from the interior (26) of the helix (20) via the bending portion (40) radially outwards in the receiving thread (A), wherein
d. the wire in the bending portion (40) between the first coil (32) and the moving tang (50) is modified mechanically, geometrically, thermally, chemically or in another way compared to the wire of the first coil so that a redressing of the moving tang (50) is facilitated.

2. Wire thread insert (10) according to claim 1, the moving tang (50) of which is redressable into the receiving thread (A) of the component (B) permanently.

3. Wire thread insert (10) according to claim 1 or 2, the moving tang (50) of which is a circular arc, the tang radius is approximately equal to a radius of the first coil (32) of the cylindrical helix (20).

4. Wire thread insert (10) according to one of the preceding claims, which has a notch (42) formed as a moving notch (7) on a radially inner side of the bending portion (40).

5. Wire thread insert (10) according to any of the preceding claims, the moving tang (50) of which is formed with a length such that in the bent-back state it has a length which extends over a circular arc with an angle of 10° to 180° starting in the bending portion (40) up to a free end of the moving tang (50).

6. Wire thread insert (10) according to any of the preceding claims, the moving tang (50) of which has a continuous front end compression face at its free end, which is arranged within the radial plane of the helix (20) in an angle of 80° to 130° related to the longitudinal axis of the wire.

7. A component (B) having a receiving thread, in which a wire thread insert (10) according to one of the preceding claims is arranged.

8. An installation tool for a wire thread insert (10) according to one of the claims 1 to 6 in a receiving thread (A) of a component (B), the tool comprising the following features:
a. a rotatable mounting spindle (60) having a drive end for rotating the mounting spindle (60) and a functional end (65) for installation of the wire thread insert (10), wherein
b. the functional end (65) comprises a moving shoulder (70) by means of which the wire thread insert (10) is screwable into the receiving thread (A) via the moving tang (50) and a compression blade (80) by means of which the moving tang (50) of the wire thread insert (10) is redressable, wherein the compression blade (80) extends in radial direction and projects over an outer diameter of the mounting spindle (60) so that the moving tang (50) is permanently redressable into the receiving thread (A) of the component (B).

9. Installation tool according to claim 8, the functional end (65) of which comprises a redressing shoulder (90) by means of which the moving tang (50) during the rotation of the mounting spindle (60) is radially outwardly movable and redressable in combination with the compression blade (80).

10. Installation tool according to one of the claims 8 to 9, the mounting spindle (60) of which has an outer diameter at the functional end (65) so that the wire thread insert (10) may be spindled or slipped on.

11. Installation tool according to one of the claims 8 to 10, the compression blade (80) of which is arranged radially and/or axially moveable related to the mounting spindle (60) to engage or disengage the moving tang (50).

12. Installation tool for a wire thread insert (10) according to one of the claims 1 to 6 in a receiving thread (A) of a component (B), the tool comprising the following features:
a. a rotatable mounting spindle (60) having a drive end for rotating the mounting spindle (60) and a functional end (65) for installing the wire thread insert (10), wherein
b. the functional end (65) comprises a moving shoulder (70) by means of which the wire thread insert (10) is screwable into the receiving thread (A) via the moving tang (50) and a compression blade (80) by means of which the moving tang (50) of the wire thread insert (10) is redressable, wherein the compression blade (80') is arranged pivotable around an eccentrically arranged point related to the front end face of the mounting spindle.

13. An installation method of a wire thread insert (10) having a redressable moving tang (50) according to one of the claims 1 to 6 by means of an installation tool according to one of the claims 8 to 12 into a receiving thread (A) of a component (B), the method comprising the following steps:
a. spindling or slipping (S1) the wire thread insert (10) on a functional end (65) of a mounting spindle (60) of the installation tool,
b. screwing-in the wire thread insert (10) into the receiving thread (A) by rotating the mounting spindle (60) in a first rotational direction,
c. redressing the moving tang (50) into the receiving thread (A) by rotating the mounting spindle (60) in a second rotational direction and
d. spindling-off or removing (S6) the mounting spindle (60) from the wire thread insert (10) with redressed moving tang (50).

14. Installation method according to claim 13, comprising the further step:
locking (S2) the moving tang (50) of the wire thread insert (10) at a moving shoulder (70) of the functional end (65) of the mounting spindle (60) so that the wire thread insert (10) is rotatable by the mounting spindle (60).

15. Installation method according to claim 13 or 14, comprising the further step:
bending-up (S4) radially the moving tang (50) by a bending-up shoulder at the functional end (65) of the mounting spindle (60).

16. Installation method according to one of the claims 13 to 15, comprising the further step:
compressing (S5) the moving tang (50) by means of a compression blade of the functional end (65) of the mounting spindle (60) so that the moving tang (50) is arranged within the receiving thread (A) of the component (B).

17. A manufacturing method of a wire thread insert (10) with redressable moving tang (50) according to one of the claims 1 to 6, the method comprising the following steps:
a. providing a wire having a circular arc shaped curved free end,
b. locking the circular arc shaped curved end at a front end of a winding spindle and winding the wire onto the winding spindle so that a cylindrical helix (20) is manufactured having a plurality of helically wound coils (30) of the wire with a curved moving tang (50) arranged inwardly related to the helix (20) which does not protrude straight radially inwardly,
c. cutting-off the wound wire thread insert (10) so that a further wire having a circular arc shaped curved free end is manufactured, and
d. modifying the wire in a bending portion (40) between a first coil (32) of the wire thread insert (10) and the moving tang (50) mechanically, geometrically, thermally, chemically or in another way compared to the wire of the first coil so that a redressing of the moving tang (50) is facilitated.

18. Manufacturing method according to claim 17, further comprising the step:
unwinding the wire thread insert (10) from the winding spindle before cutting-off and tilting the wire thread insert (10) related to its longitudinal axis compared to the longitudinal axis of the winding spindle.

19. Manufacturing method according to claim 17 or 18, further comprising the step:
cutting-off the wound wire thread insert (10) by means of a shear procedure with at least one blade, preferably a first and a second blade.

20. A device for manufacturing a wire thread insert (10) according to one of the claims 1 to 6, which has the following features:
a. a wire supply for a wire to be wound and a rotatable arranged winding spindle having a front end locking construction for the wire to be wound and
b. a cutting construction having at least a first blade by means of which the wire of the wound wire thread insert (10) is removable via a shear procedure, as well as
c. a pointing assembly by means of which the wire of a bending portion between a first coil (32) of the wire thread insert (10) and the moving tang (50) is modified mechanically, geometrically, thermally, chemically or in another way compared to the wire of the remaining wire thread insert (10) to facilitate a redressing of the moving tang (50).

## Revendications

1. Insert de filetage en fil métallique (10) destiné à être monté dans un filetage de réception (A) d'un composant (B), présentant les caractéristiques suivantes :
a. une hélice cylindrique (20) constituée d'une pluralité de spires (30) d'un fil métallique enroulées de façon hélicoïdale, laquelle comporte une première (22) et une deuxième extrémité (24), dans lequel
b. une première spire (32) prévue à la première extrémité (22) présente un tourillon d'entraînement (50) faisant saillie au-delà d'une région de courbure (40) dans un intérieur (26) de l'hélice (20), et
c. le tourillon d'entraînement (50) est relié de façon non détachable à la première spire (32) et peut être recourbé par le biais de la région de courbure (40) à partir de l'intérieur (26) de l'hélice (20) radialement vers l'extérieur dans le filetage de réception (A), dans lequel
d. le fil métallique dans la région de courbure (40) entre la première spire (32) et le tourillon d'entraînement (50) est modifié mécaniquement, géométriquement, thermiquement, chimiquement ou d'une autre façon, par rapport au fil métallique de la première spire, de manière à faciliter un recourbement du tourillon d'entraînement (50).

2. Insert de filetage en fil métallique (10) selon la revendication 1, dont le tourillon d'entraînement (50) peut être recourbé durablement dans le filetage de réception (A) du composant (B).

3. Insert de filetage en fil métallique (10) selon la revendication 1 ou 2, dont le tourillon d'entraînement (50) est un arc de cercle, dont le rayon de tourillon est approximativement égal au rayon de la première spire (32) de l'hélice cylindrique (20).

4. Insert de filetage en fil métallique (10) selon l'une des revendications précédentes, lequel présente une encoche (42) conçue comme une encoche d'entraînement (7) sur un côté intérieur radial de la région de courbure (40).

5. Insert de filetage en fil métallique (10) selon l'une des revendications précédentes, dont le tourillon d'entraînement (50) est si long qu'il présente, dans l'état recourbé, une longueur s'étendant sur un arc de cercle avec un angle de 10° à 180° à partir de la région de courbure (40) jusqu'à une extrémité libre du tourillon d'entraînement (50).

6. Insert de filetage en fil métallique (10) selon l'une des revendications précédentes, dont le tourillon d'entraînement (50) présente une surface de refoulement frontale continue à son extrémité libre, laquelle est disposée selon un angle de 80° à 130° par rapport à l'axe longitudinal du fil métallique dans un plan radial de l'hélice (20).

7. Composant (B) avec un filetage de réception (A), dans lequel est disposé un insert de filetage en fil métallique (10) selon l'une des revendications précédentes.

8. Outil d'installation pour un insert de filetage en fil métallique (10) selon l'une des revendications 1 à 6 dans un filetage de réception (A) d'un composant (B), présentant les caractéristiques suivantes :
a. une broche de montage rotative (60) avec une extrémité d'entraînement pour la rotation de la broche de montage (60) et une extrémité fonctionnelle (65) pour l'installation de l'insert de filetage en fil métallique (10), dans lequel
b. l'extrémité fonctionnelle (65) comporte une épaule d'entraînement (70) avec laquelle l'insert de filetage en fil métallique (10) peut être vissé dans le filetage de réception (A) par le biais du tourillon d'entraînement (50), et une lame de refoulement (80) avec laquelle le tourillon d'entraînement (50) de l'insert de filetage en fil métallique (10) peut être recourbé, la lame de refoulement (80) s'étendant dans la direction radiale et faisant saillie au-delà d'un diamètre extérieur de la broche de montage (60), de telle façon que le tourillon d'entraînement (50) peut être recourbé durablement dans le filetage de réception (A) du composant (B).

9. Outil d'installation selon la revendication 8, dont l'extrémité fonctionnelle (65) présente une épaule de recourbement (90), avec laquelle le tourillon d'entraînement (50) peut être déplacé radialement vers l'extérieur lors d'une rotation de la broche de montage (60) et recourbé en combinaison avec la lame de refoulement (80).

10. Outil d'installation selon l'une des revendications 8 à 9, dont la broche de montage (60) présente un diamètre extérieur au niveau de l'extrémité fonctionnelle (65), de sorte que l'insert de filetage en fil métallique (10) peut être embroché ou emboîté.

11. Outil d'installation selon l'une des revendications 8 à 10, dont la lame de refoulement (80) est disposée de manière à pouvoir se déplacer radialement et/ou axialement par rapport à la broche de montage (60), pour s'engager avec le tourillon d'entraînement (50) ou se désengager de celui-ci.

12. Outil d'installation pour un insert de filetage en fil métallique (10) selon l'une des revendications 1 à 6 dans un filetage de réception (A) d'un composant (B), présentant les caractéristiques suivantes :
a. une broche de montage rotative (60) avec une extrémité d'entraînement pour la rotation de la broche de montage (60) et une extrémité fonctionnelle (65) pour l'installation de l'insert de filetage en fil métallique (10), dans lequel
b. l'extrémité fonctionnelle (65) comporte une épaule d'entraînement (70) avec laquelle l'insert de filetage en fil métallique (10) peut être vissé dans le filetage de réception (A) par le biais du tourillon d'entraînement (50), et une lame de refoulement (80) avec laquelle le tourillon d'entraînement (50) de l'insert de filetage en fil métallique (10) peut être recourbé, la lame de refoulement (80') étant disposée de façon à pouvoir pivoter autour d'un point disposé de façon excentrique par rapport à une surface frontale de la broche de montage.

13. Procédé d'installation d'un insert de filetage en fil métallique (10) avec un tourillon d'entraînement (50) apte à être recourbé selon l'une des revendications 1 à 6, avec un outil d'installation selon l'une des revendications 8 à 12 dans un filetage de réception (A) d'un composant (B), présentant les étapes suivantes :
a. embrochage ou emboîtement (S1) de l'insert de filetage en fil métallique (10) sur une extrémité fonctionnelle (65) d'une broche de montage (60) de l'outil d'installation,
b. vissage de l'insert de filetage en fil métallique (10) dans le filetage de réception (A) par rotation de la broche de montage (60) dans une première direction de rotation,
c. recourbement du tourillon d'entraînement (50) dans le filetage de réception (A) par rotation de la broche de montage (60) dans une deuxième direction de rotation, et
d. débrochage ou retrait (S6) de la broche de montage (60) hors de l'insert de filetage en fil métallique (10) avec le tourillon d'entraînement (50) recourbé.

14. Procédé d'installation selon la revendication 13, présentant en outre :
- le blocage (S2) du tourillon d'entraînement (50) de l'insert de filetage en fil métallique (10) sur une épaule d'entraînement (70) de l'extrémité fonctionnelle (65) de la broche de montage (60), de manière à pouvoir faire tourner l'insert de filetage en fil métallique (10) conjointement par le biais de la broche de montage (60).

15. Procédé d'installation selon la revendication 13 ou 14, présentant en outre :
- l'ouverture radiale (S4) du tourillon d'entraînement (50) par une épaule d'ouverture au niveau de l'extrémité fonctionnelle (65) de la broche de montage (60).

16. Procédé d'installation selon l'une des revendications 13 à 15, présentant en outre :
- le refoulement (S5) du tourillon d'entraînement (50) par une lame de refoulement de l'extrémité fonctionnelle (65) de la broche de montage (60), de telle façon que le tourillon d'entraînement (50) est disposé dans le filetage de réception (A) du composant (B).

17. Procédé de fabrication d'un insert de filetage en fil métallique (10) avec un tourillon d'entraînement (50) apte à être recourbé selon l'une des revendications 1 à 6, présentant les étapes suivantes :
a. mise à disposition d'un fil métallique avec une extrémité libre courbée en forme d'arc de cercle,
b. blocage de l'extrémité courbée en forme d'arc de cercle sur un côté frontal d'une broche d'enroulement et enroulement du fil métallique sur la broche d'enroulement, de manière à obtenir une hélice cylindrique (20) constituée d'une pluralité de spires (30) du fil métallique enroulées de façon hélicoïdale, avec un tourillon d'entraînement (50) courbé disposé intérieurement par rapport à l'hélice (20), lequel s'étend radialement vers l'intérieur de façon non rectiligne,
c. coupe de l'insert de filetage en fil métallique (10) enroulé de manière à obtenir un autre fil métallique avec une extrémité libre courbée en forme d'arc de cercle, et
d. modification du fil métallique dans une région de courbure (40) entre une première spire (32) de l'insert de filetage en fil métallique (10) et le tourillon d'entraînement (50), mécaniquement, géométriquement, thermiquement, chimiquement ou d'une autre manière, par rapport au fil métallique de la première spire, de manière à faciliter un recourbement du tourillon d'entraînement (50).

18. Procédé de fabrication selon la revendication 17, présentant en outre :
- le débrochage de l'insert de filetage en fil métallique (10) par rapport à la broche d'enroulement avant la coupe et le basculement de l'insert de filetage en fil métallique (10) par rapport à son axe longitudinal en comparaison avec l'axe longitudinal de la broche d'enroulement.

19. Procédé de fabrication selon la revendication 17 ou 18, présentant en outre :
- la coupe de l'insert de filetage en fil métallique (10) enroulé, par une opération de cisaillement à l'aide d'au moins une lame, de préférence à l'aide d'une première et d'une deuxième lame.

20. Dispositif permettant de fabriquer un insert de filetage en fil métallique (10) selon l'une des revendications 1 à 6, présentant les caractéristiques suivantes :
a. une alimentation en fil métallique pour un fil métallique à enrouler et une broche d'enroulement disposée de façon rotative avec une structure de blocage frontale pour le fil métallique à enrouler, et
b. une structure de coupe comprenant au moins une première lame permettant de sectionner le fil métallique de l'insert de filetage en fil métallique (10) enroulé par une opération de cisaillement, et
c. un ensemble de pointage avec lequel le fil métallique d'une région de courbure entre une première spire (32) de l'insert de filetage en fil métallique (10) et le tourillon d'entraînement (50) peut être modifié mécaniquement, géométriquement, thermiquement, chimiquement ou d'une autre manière, par rapport au fil métallique restant de l'insert de filetage en fil métallique (10), afin de faciliter un recourbement du tourillon d'entraînement (50).
